# EUROPEAN PATENT SPECIFICATION

(11) **EP 2 811 145 B1**
(45) Date of publication and mention of the grant of the patent: **14.06.2017**
(21) Application number: 12867309.2
(22) Date of filing: 02.02.2012
(51) Int. Cl.: F02M 37/00, F02M 37/12, F02M 37/18

(54) **FUEL SUPPLY DEVICE**
KRAFTSTOFFZUFÜHRVORRICHTUNG
DISPOSITIF D'ALIMENTATION EN CARBURANT

(43) Date of publication of application: 10.12.2014
(73) Proprietor: Toyota Jidosha Kabushiki Kaisha, Toyota-shi, Aichi 471-8571 (JP)
(72) Inventor: KATAOKA, Chiaki, Toyota-shi, Aichi-ken, 471-8571 (JP); AKAGI, Masaki, Toyota-shi, Aichi-ken, 471-8571 (JP)
(74) Representative: TBK
(86) International application number: PCT/JP2012/052406
(87) International publication number: WO 2013/114606

(56) References cited:
- DE-A1- 4 400 919
- DE-A1-102006 024 456
- DE-A1-102009 046 104
- JP-A- H06 294 357
- JP-A- H11 117 821
- JP-A- 2004 278 529
- JP-A- 2005 214 149
- JP-A- 2007 051 633
- JP-A- 2007 321 584
- JP-A- 2008 128 068
- JP-A- 2008 514 905
- JP-A- 2008 546 944
- US-A- 4 951 699
- US-A1- 2004 182 454

## Description

### TECHNICAL FIELD

The present invention relates to a fuel supply device, and more particularly, to a fuel supply device configured to supply a fuel in a fuel tank to an engine or the like.

### BACKGROUND ART

As a fuel supply device configured to supply a fuel in a fuel tank to an external device such as an engine or the like, there is a fuel supply device having a structure in which a fuel tank is provided with a plurality of accommodation portions in which to accommodate a fuel. For example, Japanese Patent Application Publication No. 2008-121454 (JP 2008-121454 A) (Patent Document 1) and German Patent Application Publication No.10 2009 046 104 (DE 10 2009 046 104 A1) describe a fuel supply device including a first fuel storage portion and a second fuel storage portion. A fuel supply portion including a fuel pump is disposed in the first fuel storage portion. A jet pump is driven by use of a flow of a fuel in a return passage branched off from a tank fuel supply passage, so as to return a return fuel to the first fuel storage portion and to transfer a fuel in the second fuel storage portion to the first fuel storage portion.

In a structure described in the publication, at the time of a high fuel pressure and a low voltage, a control valve is closed so as to close the return passage and to stop the jet pump, thereby achieving downsizing of the fuel pump and a reduction of power consumption. However, in a case of employing a structure in which the return fuel is returned not to the first fuel storage portion (hereinafter referred to as "main-side accommodation portion") but to the second fuel storage portion (hereinafter referred to as "subsidiary-side accommodation portion"), a fuel amount in the subsidiary-side accommodation portion is increased. Since no fuel pump is disposed in the subsidiary-side accommodation portion, this structure is disadvantageous in terms of sending out the fuel to the outside, thereby consequently causing upsizing of the fuel pump and an increase of power consumption.

### SUMMARY OF THE INVENTION

### Problem to be Solved by the Invention

In consideration of the above fact, an object of the present invention is to provide a fuel supply device configured to be able to return part of a fuel to be sent outside by driving of a fuel pump, to an accommodation portion not provided with the fuel pump, thereby achieving downsizing of the fuel pump.

### Means for Solving the Problem

A fuel supply device according to a first aspect of the invention includes: a fuel-tank main body including a plurality of accommodation portions configured to accommodate a fuel therein; sending means for sending out the fuel outside the fuel-tank main body, the sending means including a sending pipe extending outside from a main-side accommodation portion, which is one of the accommodation portions, and a fuel pump provided in the sending pipe; a returning pipe configured to return part of the fuel flowing through the sending means by driving of the fuel pump to a subsidiary-side accommodation portion not provided with the sending means; a fuel transfer passage configured to transfer the fuel from the subsidiary-side accommodation portion to the main-side accommodation portion; and passage sectional area changing means for changing a sectional area of a passage of the returning pipe

In the fuel supply device of the first aspect, the sending means is provided in one of the plurality of accommodation portions configured to accommodate a fuel thereinside. The accommodation portion provided with the sending means is the main-side accommodation portion, and the accommodation portion not provided with the sending means is the subsidiary-side accommodation portion. The fuel in the main-side accommodation portion is sent out to the outside (an engine or the like) via the sending pipe by driving the fuel pump of the sending means.

Further, in the fuel supply device, it is possible to transfer the fuel from the subsidiary-side accommodation portion to the main-side accommodation portion via the fuel transfer passage. In comparison with a configuration in which the fuel is not transferred to the main-side accommodation portion, more fuel is accommodated in the main-side accommodation portion provided with the sending means, which is advantageous for sending out the fuel from the fuel-tank main body to the outside.

Further, it is possible to return part of the fuel flowing through the sending means to the subsidiary-side accommodation portion by the returning pipe. The sectional area of the passage of the returning pipe is changeable by the passage sectional area changing means. That is, it is possible to decrease an amount of the return fuel to be returned from the returning pipe to the subsidiary-side accommodation portion by the passage sectional area changing means (including a case of completely closing the returning pipe). This makes it possible to secure more amount of the fuel to be sent outside from the sending means, thereby achieving downsizing of the fuel pump and a reduction of power consumption thereof.

Note that, in a case where the returning pipe is completely closed by the passage sectional area changing means, an amount of the return fuel becomes zero, thereby further achieving the downsizing of the fuel pump and the reduction of power consumption thereof.

The fuel supply device of the first aspect of the present invention further includes a communication portion configured to communicate the fuel transfer passage with the returning pipe so that part of a fluid in the fuel transfer passage is movable to the returning pipe.

The communication portion allows part of the fluid in the fuel transfer passage to move to the return pipe. For example, in a case where gas exists in the fuel transfer passage, it is possible to send the gas from the communication portion to the return pipe, and further to send the gas to the subsidiary-side accommodation portion. That is, it is possible to restrain the gas from being sent to the main-side accommodation portion.

A third aspect is configured such that: the fuel supply device of the second aspect includes a jet pump provided in the returning pipe and connected to the communication portion.

Accordingly, a negative pressure is caused in the jet pump by the fuel flowing through the returning pipe, so that the negative pressure acts on the fuel transfer passage via the communication portion, thereby making it possible to effectively move part of the fluid (e.g., gas) of the fuel transfer passage to the return pipe.

When the jet pump is driven, it is assumed that a flow of the fuel from the main-side accommodation portion to the subsidiary-side accommodation portion occurs in the fuel transfer passage. The flow of the fuel is a flow in a reverse direction to an original flow of the fuel in the fuel transfer passage (herein just referred to as "reverse flow"). When the sectional area of the passage of the returning pipe is reduced by the passage sectional area changing means, a driving force of the jet pump is decreased, thereby making it possible to restrain the reverse flow. This makes it possible to effectively send out the fuel by the fuel sending means, thereby achieving downsizing and power saving of the fuel pump.

A fourth aspect is configured such that: in the second aspect, the passage sectional area changing means reduces the sectional area by rising of a liquid level in the fuel transfer passage.

That is, in a case where gas exists in the fuel transfer passage and the liquid level is lowered, the sectional area of the passage is secured sufficiently, thereby making it possible to efficiently move the gas in the fuel transfer passage from the communication portion to the returning pipe.

In a state where no gas exists in the fuel transfer passage (or a state where an amount of gas is reduced), the passage sectional area changing means reduces the sectional area of the passage of the returning pipe. This makes it possible to restrain the fuel from moving from the fuel transfer passage to the returning pipe (preferably, fuel movement is zero), thereby making it possible to effectively transfer the fuel to the main-side accommodation portion. This can achieve both removal of the gas from the fuel transfer passage, and efficient transfer of the fuel from the subsidiary-side accommodation portion to the main-side accommodation portion via the fuel transfer passage.

A fifth aspect is configured such that: in the fourth aspect, the passage sectional area changing means is a float valve including: a float configured to float in the fuel in the fuel transfer passage; and a valve body configured to change the sectional area along with upward and downward movements of the float.

That is, when a liquid level of the fuel in the fuel transfer passage rises, the valve body reduces the sectional area of the passage of the returning pipe by use of a characteristic of the float that floats in the fuel. It is possible to configure the passage sectional area changing means with a simple structure using the float and the valve body.

A sixth aspect is configured such that: in the fourth or fifth aspect, the fuel transfer passage is connected to the fuel pump, so that the fuel is transferred from the subsidiary-side accommodation portion to the main-side accommodation portion by driving of the fuel pump.

Accordingly, even in a state where gas exists in the fuel transfer passage, when the fuel-pump main body is driven, the jet pump is also driven by the fuel flowing through the returning pipe, thereby allowing the gas inside the fuel transfer passage to move into the returning pipe. When the liquid level of the fuel in the fuel transfer passage rises, the sectional area of the passage of the returning pipe is reduced. Hereby, in a state where no gas exists in the fuel transfer passage (or a state where an amount of gas is reduced), it is possible to secure more amount of the fuel to be sent outside from the sending means.

A seventh aspect is configured such that: the fuel supply device of any one of the second to sixth aspects includes a plurality of fuel filters formed in a pouch-like shape and disposed respectively in the plurality of accommodation portions, each of the plurality of fuel filters being configured to remove foreign substances from the fuel when the fuel flows thereinside and to form an oil film of the fuel on a surface thereof in a state where the each of the plurality of fuel filters is partially or entirely immersed in the fuel, wherein: the transfer pipe is disposed so that the fuel is transferable between the plurality of fuel filters; and the sending pipe is disposed so as to be able to send out the fuel from at least one of the plurality of fuel filters.

When the fuel passes through the fuel filter, foreign substances are removed therefrom. Due to the transfer pipe, it is possible to transfer the fuel between the plurality of fuel filters. Further, it is possible to send out the fuel to the outside from at least one of the fuel filters via the sending pipe.

In a state where part or all of the fuel filter is immersed in the fuel, an oil film of the fuel is formed on a surface of the fuel filter, so that the fuel in the fuel filter does not flow out therefrom. This makes it possible to restrain running out of the fuel and to send out the fuel to the outside.

An eighth aspect is configured such that: in any one of the first to seventh aspects, the passage sectional area changing means reduces the sectional area after a predetermined time has passed from start of driving of the fuel pump.

Immediately after the driving of the fuel pump is started, the sectional area of the passage of the returning pipe is set large. After a predetermined time has passed, the sectional area is reduced so as to move the gas inside the fuel transfer passage into the returning pipe. Thereafter, an amount of the return fuel to be returned from the returning pipe to the subsidiary-side accommodation portion can be decreased. As such, it is possible to achieve both discharge of the gas from the fuel transfer passage and sending out of the fuel by driving of the fuel pump.

Besides, it is not necessary to perform, for example, detection of the liquid level in the transfer pipe in order to change the sectional area of the passage of the returning pipe, and it is possible to change the sectional area of the passage of the returning pipe with a simple configuration.

### Advantageous Effects of Invention

The present invention is configured as such, thereby making it possible to achieve downsizing of a fuel pump in a configuration in which part of a fuel to be sent outside by driving of the fuel pump is returned to an accommodation portion not provided with the fuel pump.

### BRIEF DESCRIPTION OF THE DRAWINGS

[FIG. 1] FIG. 1 is a sectional view illustrating a fuel supply device according to a first embodiment of the present invention as well as an overall configuration of a fuel-tank main body.
[FIG. 2A] FIG. 2A is a partially enlarged sectional view of a part 2A in FIG 1 to illustrate the fuel supply device according to the first embodiment of the present invention in FIG 1.
[FIG. 2B] FIG. 2B is a partially enlarged sectional view of a part 2B in FIG. 1 to illustrate a jet pump and its vicinal area constituting the fuel supply device according to the first embodiment of the present invention in a state where a float valve is opened.
[FIG. 2C] FIG. 2C is a partially enlarged sectional view taken along a line 2C-2C in FIG. 2B to illustrate the jet pump and its vicinal area constituting the fuel supply device according to the first embodiment of the present invention in a state where the float valve is opened.
[FIG. 2D] FIG. 2D is a partially enlarged sectional view taken along a line 2D-2D in FIG. 2B to illustrate the jet pump and its vicinal area constituting the fuel supply device according to the first embodiment of the present invention.
[FIG 2E] FIG. 2E is a partially enlarged sectional view of the jet pump and its vicinal area constituting the fuel supply device according to the first embodiment of the present invention in a state where the float valve is closed.
[FIG. 2F] FIG. 2F is a partially enlarged sectional view taken along a line 2F-2F in FIG 2E to illustrate the jet pump and its vicinal area constituting the fuel supply device according to the first embodiment of the present invention in a state where the float valve is closed.
[FIG. 3] FIG. 3 is a partially enlarged sectional view of a first subsidiary cup of the fuel supply device according to the first embodiment of the present invention.
[FIG 4A] FIG. 4A is a partially enlarged sectional view of a second subsidiary cup of the fuel supply device according to the first embodiment of the present invention.
[FIG. 4B] FIG 4B is a sectional view illustrating a horizontal section of a float valve provided in the second subsidiary cup of the fuel supply device according to the first embodiment of the present invention.
[FIG. 5] FIG. 5 is a sectional view illustrating the fuel supply device according to the first embodiment of the present invention in a state where a fuel amount in a second accommodation portion is small, as well as the overall configuration of the fuel-tank main body.
[FIG. 6] FIG 6 is a sectional view illustrating the fuel supply device according to the first embodiment of the present invention in a state where the fuel amount in the second accommodation portion is small, as well as the overall configuration of the fuel-tank main body.
[FIG. 7A] FIG 7A is a partially cutaway plan view of a jet pump and its vicinal area constituting a fuel supply device according to a second embodiment of the present invention in a state where a float valve is opened.
[FIG. 7B] FIG. 7B is a partially enlarged sectional view taken along a line 7B-7B in FIG. 7A to illustrate the jet pump and its vicinal area constituting the fuel supply device according to the second embodiment of the present invention in a state where the float valve is opened.
[FIG. 7C] FIG. 7C is a partially enlarged sectional view of the jet pump and its vicinal area constituting the fuel supply device according to the second embodiment of the present invention in a state where the float valve is closed.
[FIG. 8A] FIG 8A is a partially cutaway plan view of a jet pump and its vicinal area constituting a fuel supply device according to a third embodiment of the present invention in a state where a float valve is opened.
[FIG. 8B] FIG. 8B is a partially enlarged sectional view taken along a line 8B-8B in FIG. 8A to illustrate the jet pump and its vicinal area constituting the fuel supply device according to the third embodiment of the present invention in a state where the float valve is opened.
[FIG 8C] FIG. 8C is a partially enlarged sectional view of the jet pump and its vicinal area constituting the fuel supply device according to the third embodiment of the present invention in a state where the float valve is closed.
[FIG. 9] FIG. 9 is a sectional view illustrating a fuel supply device according to a fourth embodiment of the present invention as well as an overall configuration of a fuel-tank main body.

### MODES FOR CARRYING OUT THE INVENTION

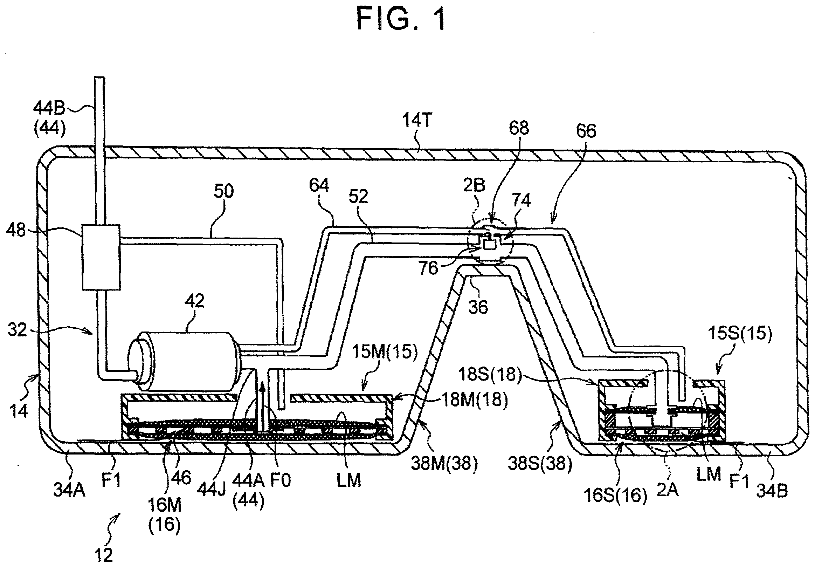

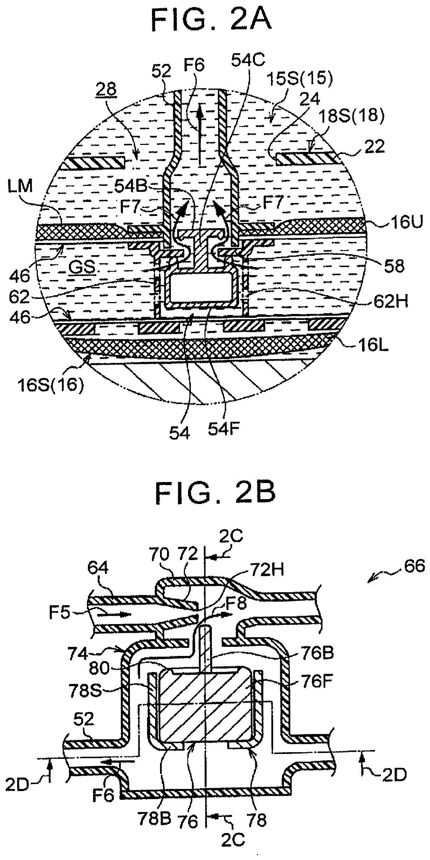

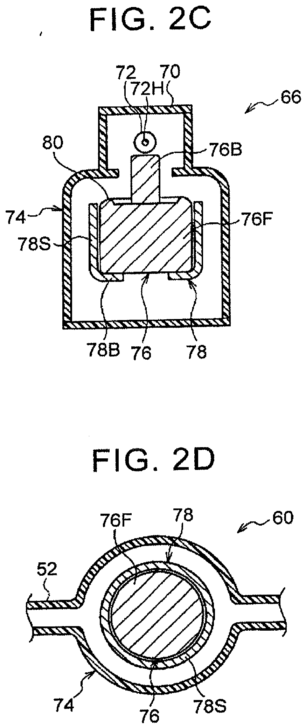

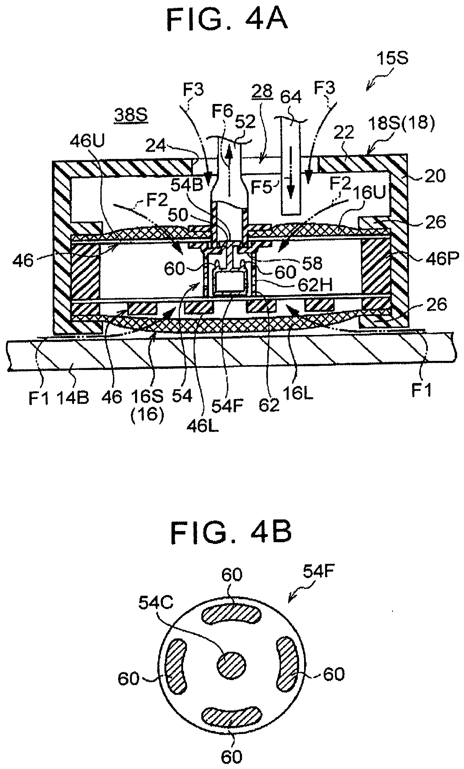

FIG. 1 illustrates a schematic configuration of a fuel supply device 12 according to a first embodiment of the present invention. Further, FIGS. 2A to 4B partially illustrate the fuel supply device 12 in an enlarged manner. In FIGS. 2B to 4B, a fuel is not illustrated for the convenience of illustration. However, in practice, a fuel GS exists within a fuel-tank main body 14 appropriately.

The fuel supply device 12 includes the fuel-tank main body 14 in which to accommodate the fuel GS. The fuel-tank main body 14 of the present embodiment includes: two low-position parts 34A, 34B provided on both sides in a width direction; and a high-position part 36 formed between the low-position parts 34A, 34B so as to be placed at a position relatively higher than the low-position parts 34A, 34B. That is, the fuel-tank main body 14 is configured such that the low-position parts 34A, 34B are formed on both sides of the single high-position part 36, so that the fuel-tank main body 14 is formed as a saddle-type fuel tank including a first fuel accommodation portion 38M and a second fuel accommodation portion 38S, as a whole.

Note that the present embodiment deals with an example in which the first fuel accommodation portion 38M is formed to be larger than the second fuel accommodation portion 38S. However, a relative magnitude relationship in volume between them is not limited particularly, and the first fuel accommodation portion 38M and the second fuel accommodation portion 38S may have an equivalent volume. In the following description, in a case where it is not necessary to distinguish the first fuel accommodation portion 38M from the second fuel accommodation portion 38S particularly, they are just referred to as a fuel accommodation portion 38.

An inlet pipe (not shown) is provided in an upper part of a first-fuel-accommodation portion-38M side, so as to perform refueling to the first fuel accommodation portion 38M.

A member, such as a transaxle, constituting an automobile is disposed between the first fuel accommodation portion 38M and the second fuel accommodation portion 38S (below the high-position part 36), and thus, a space therebetween is used efficiently.

A first subsidiary cup 15M is disposed in the first fuel accommodation portion 38M, and a second subsidiary cup 15S is disposed in the second fuel accommodation portion 38S. The first subsidiary cup 15M and the second subsidiary cup 15S have different sizes according to capacities of the first fuel accommodation portion 38M and the second fuel accommodation portion 38S, but have generally the same essential configuration. In the following description, in a case where it is not necessary to distinguish the first subsidiary cup 15M from the second subsidiary cup 15S particularly, they are described as a subsidiary cup 15.

The subsidiary cup 15 includes a fuel filter 16. In the following description, a first fuel filter 16M of the first subsidiary cup 15M is distinguished from a second fuel filter 16S of the second subsidiary cup 15S as needed. However, in a case where it is not necessary to distinguish them from each other, they are described just as the fuel filter 16.

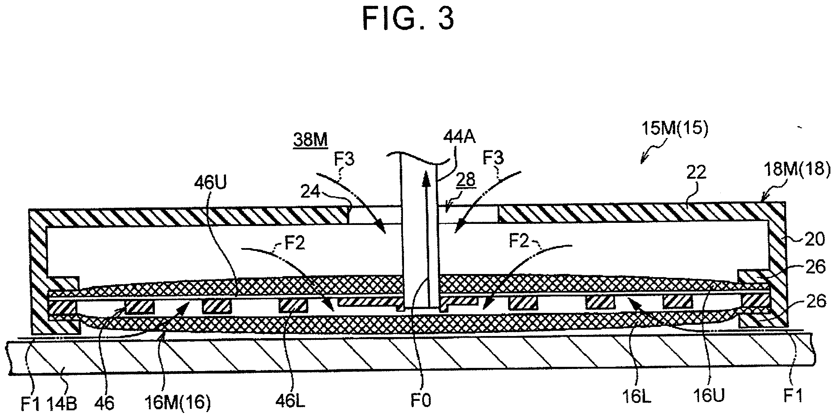

As illustrated in FIGS. 3 and 4A, the fuel filter 16 is formed, generally in a pouch-like shape, from a material (e.g., woven fabric, nonwoven fabric, porous resin, or the like) having a characteristic that allows the fuel GS to pass through the fuel filter 16 from its outside to its inside (see arrows F1 and F2), so as to remove foreign substances in the fuel at the time, thereby restraining the foreign substances from flowing into the fuel filter 16. The fuel GS thus passing through the fuel filter 16 can be accumulated thereinside.

Further, in a state where at least part of the fuel filter 16 is immersed in the fuel in the fuel accommodation portion 38, an oil film LM of the fuel GS is formed and maintained on a surface of the fuel filter 16.

Particularly, in the present embodiment, only peripheries of two nonwoven fabrics having the same shape (e.g., a polygonal shape such as a square shape, a round or oval shape, or the like) are joined to each other, and an upper filter cloth 16U and a lower filter cloth 16L have curved shapes so that the upper filter cloth 16U and the lower filter cloth 16L respectively project upward and downward. Accordingly, a space to accommodate the fuel GS is formed between the upper filter cloth 16U and the lower filter cloth 16L.

A material for the upper filter cloth 16U and the lower filter cloth 16L is not limited to the nonwoven fabric, and the upper filter cloth 16U and the lower filter cloth 16L may be woven fabrics, spongy members, mesh-shaped members, or the like.

The fuel filter 16 (particularly, the lower filter cloth 16L) is disposed along a bottom wall 14B of the fuel-tank main body 14 so as to be generally parallel therewith. Hereby, as illustrated by the arrows F1 in FIGS. 1, 3, and 4A, it is possible to flow the fuel GS into the fuel filter 16 via a gap between the fuel filter 16 and the bottom wall 14B. Besides, since the fuel filter 16 is provided so as to extend along the bottom wall 14B, even if the fuel GS in the fuel accommodation portion 38 is decreased or leans to one side, it is possible to more surely maintain a state where part of the fuel filter 16 is immersed in the fuel GS.

Particularly, in the present embodiment, the upper filter cloth 16U and the lower filter cloth 16L are made from different materials, and the materials of the filter cloths are selected so that a pressure loss of the upper filter cloth 16U is larger than a pressure loss of the lower filter cloth 16L.

The "pressure loss" used herein is a difference between pressures obtained before and after the fuel GS passes through the upper filter cloth 16U or the lower filter cloth 16L (for example, before and after driving of the main body of fuel pump 42, which will be described later). Accordingly, the lower filter cloth 16L is configured such that the fuel GS relatively easily passes therethrough, in comparison with the upper filter cloth 16U.

In the present embodiment, in order to provide such a difference in pressure loss, the upper filter cloth 16U is configured such that a total area of pores of the nonwoven fabric is smaller than that of the lower filter cloth 16L. Note that the upper filter cloth 16U and the lower filter cloth 16L may have an equivalent pressure loss.

A space constituting member 46 is disposed between the upper filter cloth 16U and the lower filter cloth 16L. The space constituting member 46 includes an upper bone member 46U and a lower bone member 46L disposed on an upper side and on a lower side via a space therebetween. Due to the space constituting member 46, the first fuel filter 16M of the first subsidiary cup 15M maintains such a shape that the upper filter cloth 16U is curved upward in a projecting manner and the lower filter cloth 16L is curved downward in a projecting manner, thereby making it possible to surely maintain therebetween a space in which to accumulate the fuel GS.

Further, particularly in the second fuel filter 16S of the second subsidiary cup 15S, as can be seen from FIG 4A, due to a strut 46P extending downward from the upper bone member 46U, the upper bone member 46U is largely spaced from the lower bone member 46L. Hereby, a larger space is formed between the upper filter cloth 16U and the lower filter cloth 16L, as compared with the first fuel filter 16M of the first subsidiary cup 15M.

An accumulation member 18 is provided above the fuel filter 16. In the following description, a first accumulation member 18M of the first subsidiary cup 15M is distinguished from a second accumulation member 18S of the second subsidiary cup 15S as needed, but in a case where it is not necessary to distinguish them from each other, they are described just as the accumulation member 18.

As illustrated in FIGS. 3 and 4A, the accumulation member 18 of the present embodiment includes a tubular side wall tube 20 provided in a perpendicularly standing manner from an outer edge part of the fuel filter 16. A bottom face of the side wall tube 20 is joined (by welding, for example) to an outer peripheral part of the fuel filter 16. The subsidiary cup 15 is constituted by the fuel filter 16 and the accumulation member 18. The side wall tube 20 serves as a peripheral part of the accumulation member 18.

In the present embodiment, a joining piece 26 is formed in a lower part of the side wall tube 20. The joining piece 26 has such an effect that a joining area between the side wall tube 20 and the fuel filter 16 is increased so as to improve a joining strength, and an upward movement of the fuel filter 16 is restrained at the time when the fuel GS flows into the fuel filter 16 through the lower filter cloth 16L. Note that the joining piece 26 can be omitted.

Further, a cover plate portion 22 extends from an upper end of the side wall tube 20 toward a center in a plan view. The accumulation member 18 is constituted by the upper filter cloth 16U of the fuel filter 16 in addition to the side wall tube 20 and the cover plate portion 22. In other words, a bottom part of the accumulation member 18 is constituted by the upper filter cloth 16U.

In the accumulation member 18, the fuel GS can be accumulated above the fuel filter 16. In a central part of the cover plate portion 22, an inflow port 24 penetrating through the cover plate portion 22 in a thickness direction is formed. As illustrated by arrows F3 in FIGS. 3 and 4A, the fuel GS in the first fuel accommodation portion 38M and the second fuel accommodation portion 38S flows into the first accumulation member 18M and the second accumulation member 18S, through the inflow port 24.

As can be seen from FIG. 1, a fuel pump module 32 is provided above the first subsidiary cup 15M of the first fuel accommodation portion 38M. The fuel pump module 32 includes a fuel-pump main body 42. A fuel suction pipe 44A extends downward from the fuel-pump main body 42. A bottom end of the fuel suction pipe 44A is inserted into the inflow port 24 of the first accumulation member 18M, and further penetrates through the upper filter cloth 16U of the first fuel filter 16M, so as to be opened within the fuel filter 16.

As can be seen from FIG 3, in the first subsidiary cup 15M of the first fuel accommodation portion 38M, an inside dimension of the inflow port 24 is larger than an outside diameter of the fuel suction pipe 44A. Hereby, a hole edge of the inflow port 24 does not make contact with the fuel suction pipe 44A, so that the fuel GS can flow into the first accumulation member 18M through a gap 28 therebetween, as illustrated by the arrows F3.

Further, a fuel discharge pipe 44B extends upward from the fuel-pump main body 42. The fuel discharge pipe 44B penetrates through a top wall 14T of the fuel-tank main body 14 so as to extend outside. By driving of the fuel-pump main body 42, the fuel is sucked up by the fuel suction pipe 44A, and the fuel GS is supplied to an engine (not shown) from the fuel discharge pipe 44B. A fuel sending pipe 44 of the present embodiment is configured to include the fuel suction pipe 44A and the fuel discharge pipe 44B.

In a middle of the fuel discharge pipe 44B, a pressure regulator 48 is disposed. The pressure regulator 48 performs pressure regulation so that a pressure of the fuel GS sent out from the fuel-pump main body 42 is within a predetermined range, and sends out the fuel GS to the outside (the engine or the like).

An upper end of a return pipe 50 is connected to the pressure regulator 48. A surplus of the fuel GS in the pressure regulation is returned as a return fuel into the fuel-tank main body 14 via the return pipe 50. Particularly, in the present embodiment, a bottom end of the return pipe 50 is placed in the first accumulation member 18M of the first fuel accommodation portion 38M. Hereby, the return fuel is returned into the first accumulation member 18M, thereby making it possible to more surely maintain a state where the fuel GS is accumulated in the first accumulation member 18M.

A junction portion 44J is set in an intermediate part of the fuel suction pipe 44A. The junction portion 44J is connected to the second fuel filter 16S of the second fuel accommodation portion 38S via a fuel transfer pipe 52. That is, the fuel transfer pipe 52 is connected to a fuel suction opening (not shown) of the fuel-pump main body 42 via part of the fuel suction pipe 44A. Substantially, a fuel transfer passage of the present invention is constituted by the fuel transfer pipe 52, and that part of the fuel suction pipe 44A which is closer to the first fuel filter 16M (a lower side) than the junction portion 44J.

Since the fuel transfer pipe 52 (the fuel transfer passage) is connected to the fuel suction opening of the fuel-pump main body 42 as such, it is possible to suck up the fuel GS in the second fuel filter 16S via the fuel transfer pipe 52 by driving of the fuel-pump main body 42. Then, the fuel GS thus sucked up is joined to the fuel suction pipe 44A from the junction portion 44J. This accordingly makes it possible to transfer the fuel GS in the second fuel filter 16S of the second fuel accommodation portion 38S, into the first fuel filter 16M of the first fuel accommodation portion 38M and to send out the fuel GS to the outside from the fuel discharge pipe 44B.

As illustrated in FIG. 4A, an inflow port 24 is also formed in the second accumulation member 18S of the second fuel accommodation portion 38S. An inside dimension of the inflow port 24 is larger than an outside diameter of the fuel transfer pipe 52. Hereby, a hole edge of the inflow port 24 does not make contact with the fuel transfer pipe 52, so that the fuel GS can flow into the second accumulation member 18S through a gap 28 therebetween, as illustrated by the arrows F3.

A pressure loss of the fuel suction pipe 44A (particularly, a part from the bottom end of the fuel suction pipe 44A to the junction portion 44J) is set larger than a pressure loss of the fuel transfer pipe 52. In other words, a flow resistance of the fuel GS in the fuel suction pipe 44A is larger than a flow resistance of the fuel in the fuel transfer pipe 52. Accordingly, in a case where the fuel GS can be sucked up from both of the first fuel filter 16M and the second fuel filter 16S by driving of the fuel-pump main body 42, the fuel GS is initially sucked up from the second fuel filter 16S, preferentially.

A float valve 54 is disposed in that part of the fuel transfer pipe 52 which is placed inside the second fuel filter 16S. As also specifically illustrated in FIG. 2A, the float valve 54 includes a float portion 54F having a specific gravity that allows the float portion 54F to float in the fuel GS in the second fuel filter 16S, and a disciform valve portion 54B disposed on an upper part of the float portion 54F. The valve portion 54B is connected to the float portion 54F via a connection portion 54C.

A valve seat 58 is formed in the fuel transfer pipe 52, and a through hole 56 is formed in a center of the valve seat 58. The connection portion 54C is inserted into the through hole 56, and the valve portion 54B is placed above the valve seat 58. As illustrated in FIG. 2A, in a state where more than a predetermine amount of the fuel GS exists in the second fuel filter 16S, the float portion 54F floats in the fuel GS, so that the valve portion 54B is separated from the valve seat 58. Since the float valve 54 is opened, the fuel is movable into the fuel transfer pipe 52 from the second fuel filter 16S.

Note that, as specifically illustrated in FIGS. 4A and 4B, a plurality of ribs 60 is formed on a top face of the float portion 54F. The ribs 60 prevent the float portion 54F from making close contact with a bottom face of the valve seat 58 even if the float portion 54F floats. Hereby, a gap is formed between the float portion 54F and the valve seat 58 so that the fuel GS can pass therethrough. The plurality of ribs 60 are separated from each other, and in a state where the float portion 54F rises, the fuel GS moves through gaps between the ribs 60.

On the other hand, when the fuel GS in the second fuel filter 16S is the predetermined amount or less (including a case where no fuel GS exists), the float portion 54F moves downward, so that the valve portion 54B makes close contact with a top face of the valve seat 58. Since the float valve 54 is closed, a gas component in the second fuel filter 16S does not move into the fuel transfer pipe 52.

Note that the "predetermined amount" indicates a threshold at which the gas component may move into the fuel transfer pipe 52 in a case where the gas component exists in the second fuel filter 16S.

A tubular guide member 62 is formed in the space constituting member 46 of the second fuel accommodation portion 38S. The guide member 62 surrounds a circumference of the float portion 54F, and guides the float portion 54F so as not to carelessly move in a lateral direction when the float portion 54F moves in an up-down direction. A communicating hole 62H is formed in the guide member 62, so that the fuel GS is movable from an outside of the guide member 62 to an inside thereof.

As illustrated in FIG. 1, the fuel-pump main body 42 is provided with a vapor discharge port (not illustrated) configured to discharge part of the fuel GS in the fuel-pump main body 42 (together with vapor if the vapor (a gas component) is caused due to decompression boiling or the like). One end of a vapor discharge pipe 64 is connected to the vapor discharge port.

The other end of the vapor discharge pipe 64 is placed in the second accumulation member 18S (above the upper filter cloth 16U) as specifically illustrated in FIG. 4A. Accordingly, part of the fuel in the fuel-pump main body 42 is discharged into the second accumulation member 18S. Thus, the vapor discharge pipe 64 of the present embodiment is a pipe that allows part of the fuel in the fuel-pump main body 42 to be returned to the second fuel accommodation portion 38S, and is an example of a returning pipe of the present invention.

As illustrated in FIG 1, in the present embodiment, the vapor discharge pipe 64 is placed above the fuel transfer pipe 52, in an area above the high-position part 36. Further, an intermediate part of the fuel transfer pipe 52 is placed close to an intermediate part of the vapor discharge pipe 64, and in a close portion 66 (at a highest position of the fuel transfer pipe 52), the fuel transfer pipe 52 communicates with the vapor discharge pipe 64 via a communication portion 74.

The vapor discharge pipe 64 is provided with a jet pump 68 placed at a position above the communication portion 74. As specifically illustrated in FIG. 2B, the jet pump 68 includes a large-diameter portion 70 in which the vapor discharge pipe 64 is locally increased in diameter in the close portion 66. Part of the vapor discharge pipe 64 which is placed closer to the fuel-pump main body 42 than the large-diameter portion 70 extends inside the large-diameter portion 70, and a reduced portion 72 is formed in an extending end thereof.

Also as illustrated in FIG. 2B, when a fluid (vapor and fuel) flowing through the vapor discharge pipe 64 in an arrow-F5 direction reaches the large-diameter portion 70 from a reduced opening 72H of the reduced portion 72, a negative pressure is caused in the large-diameter portion 70. The negative pressure acts on the fuel transfer pipe 52 via the communication portion 74. In view of this, when the fuel GS in the second fuel filter 16S is sucked up by the fuel transfer pipe 52, not only a suction force of the fuel-pump main body 42 but also a suction force due to the negative pressure of the jet pump 68 acts on the fuel GS in the second fuel filter 16S.

Further, part of the fluid in the fuel transfer pipe 52 is movable to the vapor discharge pipe 64 via the communication portion 74. Particularly, in a case where gas exists in the fuel transfer pipe 52, the gas is moved into the vapor discharge pipe 64 by suction due to the negative pressure of the jet pump 68.

Further, even if a gas component such as air bubbles exists in the fuel GS to be transferred in the fuel transfer pipe 52 in an arrow-F6 direction, since the vapor discharge pipe 64 is placed above the fuel transfer pipe 52, it is possible to move the air bubbles or the like to the vapor discharge pipe 64 via the communication portion 74. The gas thus moved to the vapor discharge pipe 64 is discharged into the second accumulation member 18S via the vapor discharge pipe 64.

Particularly, in the present embodiment, the close portion between the fuel transfer pipe 52 and the vapor discharge pipe 64 is provided at the highest position of the fuel transfer pipe 52, and the communication portion 74 is placed in the close portion. That is, the jet pump 68 is provided at the highest position of the fuel transfer pipe 52. This makes it possible to effectively move the gas in the fuel transfer pipe 52 to the vapor discharge pipe 64.

As specifically illustrated in FIGS. 2B to 2F, a float valve 76 is accommodated in the communication portion 74. The float valve 76 includes: a float 76F having a specific gravity that allows the float 76F to float in the fuel GS; and a valve body 76B projecting upward from a top face of the float 76F.

As can be seen from FIGS. 2B and 2C, in a state where no fuel GS exists in the communication portion 74 and the float 76F is moved downward, the valve body 76B opens the reduced opening 72H of the reduced portion 72. In this state, a flow of the fluid (the fuel GS) occurs in the vapor discharge pipe 64 in the arrow-F5 direction, so that the jet pump 68 yields its original function.

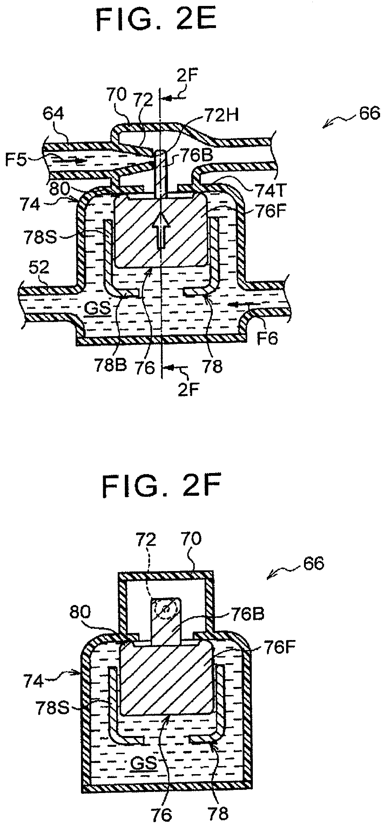

On the other hand, as illustrated in FIGS. 2E to 2F, in a state where a liquid level of the fuel GS rises in the communication portion 74 and the float 76F moves upward (it floats in the fuel GS), the valve body 76B closes the reduced opening 72H of the reduced portion 72. Hereby, the flow of the fluid (the fuel GS) in the arrow-F5 direction is stopped in the vapor discharge pipe 64, so that the jet pump 68 does not work.

As such, the float valve 76 has a function to change a sectional area of a passage of the vapor discharge pipe 64, and is an example of "passage sectional area changing means" in the present invention.

In the communication portion 74, a float accommodation chamber 78 in which to accommodate the float 76F is formed. A side wall 78S of the float accommodation chamber 78 surrounds a side surface of the float 76F, and has a function to guide the float 76F to move in the up-down direction without deviating laterally. A bottom wall 78B of the float accommodation chamber 78 has a function to support the float 76F that is moved downward.

On a top face 76T of the float 76F, an annular sealing portion 80 surrounding the valve body 76B is formed. As illustrated in FIGS. 2E and 2F, the sealing portion 80 makes close contact with the top wall 74T of the communication portion 74 in a state where the valve body 76B closes the reduced opening 72H due to rising of the float 76F. Hereby, the flow of the fluid (the fuel GS) flowing from the fuel transfer pipe 52 so as to pass through a gap between the top face 76T of the float 76F and the top wall 74T of the communication portion 74 is prevented.

Next will be described a function of the fuel supply device 12 of the present embodiment.

As illustrated in FIG. 1, in a state where a sufficient amount of the fuel GS exists in the fuel-tank main body 14 (e.g., a state where a fuel liquid level LS is higher than the high-position part 36), the fuel GS flows into the accumulation member 18 via the gap 28 in each of the first fuel accommodation portion 38M and the second fuel accommodation portion 38S, so that the fuel GS is accumulated in the accumulation member 18. Further, in this state, as can be seen from FIG. 2A, since more than a predetermined amount of the fuel GS exists in the second fuel filter 16S of the second subsidiary cup 15S, the float valve 54 moves upward. This allows the fuel GS to move from the fuel filter 16 to the fuel transfer pipe 52, as illustrated by arrows F7.

Here, when the fuel-pump main body 42 is driven, the fuel GS in the first fuel filter 16M is sucked up via the fuel suction pipe 44A as illustrated by an arrow F0 in FIG. 3. At the same time, as illustrated by an arrow F6 in FIG. 2A, the fuel GS in the second fuel filter 16S is sucked up from the fuel transfer pipe 52, so as to be transferred via the junction portion 44J and the fuel suction pipe 44A. Then, the fuel GS is supplied to the engine or the like (not shown) from the fuel discharge pipe 44B. At this time, in each of the first subsidiary cup 15M and the second subsidiary cup 15S, foreign substance in the fuel is removed by the fuel filter 16.

Particularly, in the present embodiment, the pressure loss of the lower filter cloth 16L is lower (smaller) than the pressure loss of the upper filter cloth 16U, so that more fuel GS substantially passes through the lower filter cloth 16L so as to flow into the fuel filter 16 as illustrated by the arrows F2. Further, as illustrated by the arrows F3, the fuel GS in the fuel-tank main body 14 flows into the accumulation member 18 via the gap 28.

At this time, if at least part of the fuel filter 16 is immersed in the fuel, the oil film LM on its surface is maintained. Due to a surface tension of the oil film, an energy necessary for sending out of the fuel is in such a relationship of (gas suction from a vapor phase) > (fuel suction from a liquid phase), so that only the fuel GS of a liquid component is sucked up to flow into the fuel filter 16. In such states, by driving of the fuel pump module 32, it is possible to send out the fuel GS in the fuel filter 16 to the outside.

Further, in the present embodiment, the pressure loss of the fuel suction pipe 44A is set larger than the pressure loss of the fuel transfer pipe 52. Accordingly, by driving of the fuel-pump main body 42, the fuel GS is sucked up from the second fuel filter 16S, in preference to the first fuel filter 16M. Since the fuel GS in the second subsidiary cup 15S is send out to the outside in preference to the fuel GS in the first subsidiary cup 15M as such, it is possible to more surely retain the fuel GS in the first fuel accommodation portion 38M as compared with the second fuel accommodation portion 38S.

In a case where the fuel GS in the fuel-tank main body 14 leans to one side and the fuel liquid level LS is inclined due to vehicle running on a slope, acceleration or deceleration of the vehicle, turning of the vehicle, or the like, a relatively large amount of the fuel GS remains in the first fuel accommodation portion 38M, so that it possible to more effectively prevent an occurrence of running out of the fuel at the time when the fuel liquid level is inclined.

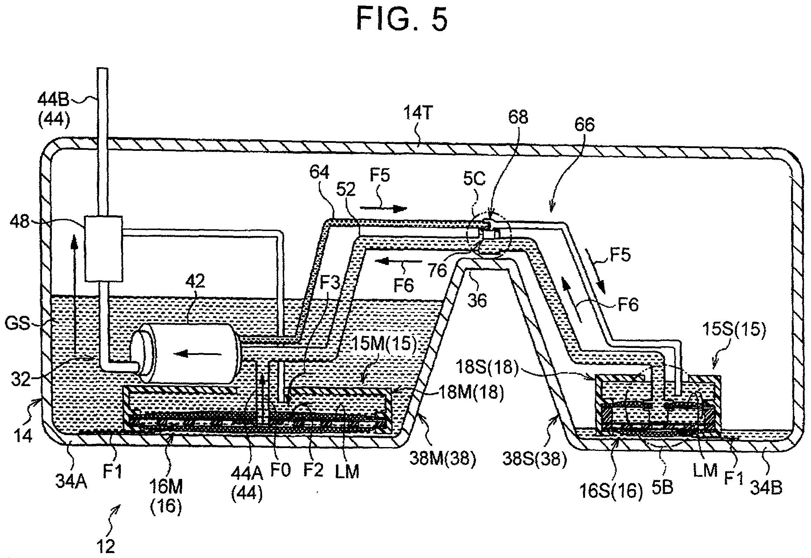

As described above, when the fuel GS is sent out from the second fuel accommodation portion 38S preferentially, it is assumed that a fuel amount of the second fuel accommodation portion 38S becomes smaller than a fuel amount of the first fuel accommodation portion 38M, as illustrated in FIG. 5. However, if at least part of the second fuel filter 16S (the lower filter cloth 16L in the present embodiment) is immersed in the fuel GS, the oil film LM of the fuel GS is formed and maintained on the surface of the second fuel filter 16S.

Further, the bottom part of the second accumulation member 18S is constituted by the upper filter cloth 16U of the fuel filter 16. That is, in the present embodiment, if the fuel exists in the second accumulation member 18S, a state where part of the second fuel filter 16S is immersed in the fuel GS is maintained. Hereby, the oil film LM formed on the surface of the second fuel filter 16S is maintained continuously. This accordingly restrains the oil film LM in the second fuel filter 16S from disappearing in the second subsidiary cup 15S, and hereby, the fuel GS in the accumulation member 18 flows therein.

As such, in the fuel supply device 12 of the present embodiment, it is possible to more surely maintain the oil film LM in the second fuel filter 16S of the second subsidiary cup 15S, thereby restraining gas from carelessly flowing into the second fuel filter 16S. That is, it is possible to send out more amount (preferably, all) of the fuel GS in the second fuel accommodation portion 38S by driving of the fuel-pump main body 42.

Besides, for example, even in a case where the fuel GS moves from the first fuel accommodation portion 38M to the second fuel accommodation portion 38S at the time when the fuel liquid level is inclined, it is possible to maintain a fluid-tight state (a state where no gas component exist) in a path from the second fuel filter 16S of the second fuel accommodation portion 38S to the fuel-pump main body 42. If a gas component exists, it is necessary to discharge the gas component at the time of driving of the fuel-pump main body 42. This may take long time for sending out of the fuel (responsiveness decreases). However, in the present embodiment, it is possible to send out the fuel GS to the outside in a short time from driving of the fuel-pump main body 42 (responsiveness of sending out of the fuel is high).

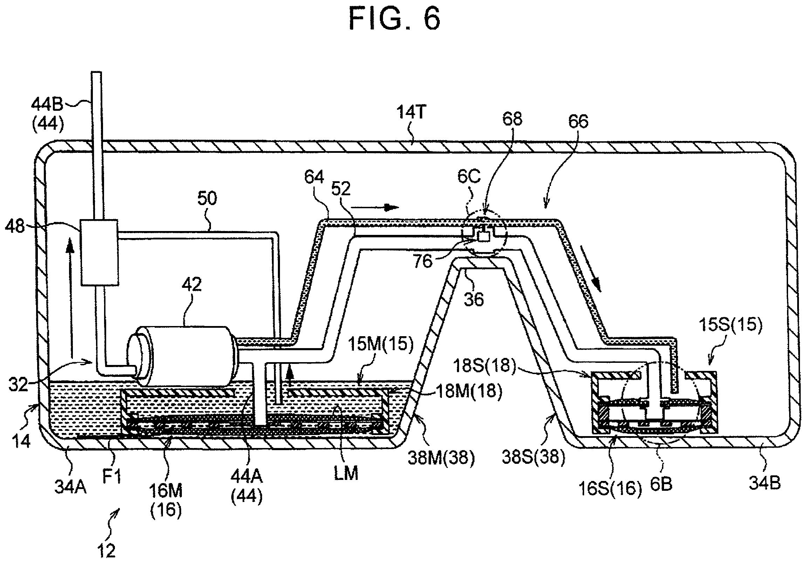

Here, assume an initial state (at the time of factory shipment or the like) of an automobile provided with the fuel supply device 12, for example. In this state, as illustrated in FIG. 6, such a state may be caused that the fuel GS exists only in the first fuel accommodation portion 38M, and no fuel GS exists in the second fuel accommodation portion 38S (inside the second subsidiary cup 15S (including the fuel filter 16)) and the fuel transfer pipe 52. Accordingly, as illustrated in FIGS. 2B and 2C, the float valve 76 moves downward, and the valve body 76B opens the reduced opening 72H.

Since the fuel GS exists in the first fuel filter 16M, when the fuel-pump main body 42 is driven in such a state, the fuel GS can be sent outside. Part of the fuel flows from the fuel-pump main body 42 into the vapor discharge pipe 64 as illustrated by the arrow F5, and then flows into the second accumulation member 18S. Hereby, the fuel GS is accumulated in the second fuel filter 16S in a short time, so that the oil film LM is formed on the surface of the second fuel filter 16S in a short time. This makes it possible to restrain suction of the gas component from the second fuel filter 16S via the fuel transfer pipe 52.

Further, in the present embodiment, the float valve 54 is disposed in that part of the fuel transfer pipe 52 which is placed inside the second fuel filter 16S. In a state where more than a predetermined amount of the fuel GS exists in the second fuel filter 16S, the float valve 54 is opened (see FIG. 2A), but in a state where the fuel GS in the second fuel filter 16S is the predetermined amount or less, the float valve 54 is moved down, so that the bottom end of the fuel transfer pipe 52 is closed as illustrated in FIG. 4A. Accordingly, in the aforementioned initial state or the like state, it is possible to more surely restrain suction of the gas component from the second fuel filter 16S via the fuel transfer pipe 52.

Further, the float valve 54 is disposed in that lowest end part of the fuel transfer pipe 52 which is placed inside the second fuel filter 16S. If the float valve 54 is provided at a position except for the lowest end part, there is such a possibility that a gas component may exist in a part between the lowest end part and the float valve 54 (part of the fuel transfer pipe 52) and the gas component may be send out to the fuel-pump main body 42 as so-called death gas. However, in the present embodiment, it is also possible to restrain occurrence of such death gas.

Note that, even in a case where the gas component is restrained from flowing into the fuel transfer pipe 52 as such, at the time of the aforementioned initial state (factory shipment) or at the time when the amount of the fuel in the second fuel accommodation portion 38S becomes extremely small, it is assumed that the gas component exists in the fuel transfer pipe 52.

In the fuel supply device 12 of the present embodiment, the float valve 76 is disposed in the communication portion 74. As illustrated in FIGS. 2B and 2C, in a state where no fuel GS exist in the fuel transfer pipe 52 (the communication portion 74), the float valve 76 moves downward, so that the valve body 76B opens the reduced opening 72H (a sectional area of the passage in the return pipe 50 is secured sufficiently).

Accordingly, the jet pump 68 functions due to the fuel GS flowing through the vapor discharge pipe 64 in the arrow-F5 direction, thereby making it possible to move the gas inside the fuel transfer pipe 52 to the vapor discharge pipe 64 via the communication portion 74. This makes it possible to restrain the gas component from being sent out from the second fuel accommodation portion 38S to the fuel-pump main body 42, thereby increasing responsiveness at the time when the fuel is sent outside.

Particularly, the communication portion 74 is disposed at the highest position of the fuel transfer pipe 52. This makes it possible to effectively move the gas inside the fuel transfer pipe 52 to the vapor discharge pipe 64.

In the meantime, in a normal state, a sufficient amount of the fuel GS exists in the fuel transfer pipe 52, so that the float valve 76 moves upward and the valve body 76B closes the reduced opening 72H, as illustrated in FIGS. 2E and 2F. Because of this, the jet pump 68 does not work. That is, no fuel passes through the reduced opening 72H, so that a function of the fuel-pump main body 42 to drive the jet pump 68 becomes unnecessary, thereby making it possible to achieve downsizing and power saving of the fuel-pump main body 42.

Besides, when the valve body 76B closes the reduced opening 72H as such, a flow of the fuel in the vapor discharge pipe 64 in the arrow-F5 direction is stopped. Hereby, no fuel is returned to the second fuel accommodation portion 38S by driving of the fuel-pump main body 42, and the fuel just by that much is additionally sent as a fuel to be sent out to the outside, thereby resulting in that, even with a small-sized fuel-pump main body 42, it is possible to secure an amount of the fuel to be sent out.

Further, in the fuel supply device 12 of the present embodiment, in a state where the float 76F moves upward, the annular sealing portion 80 makes close contact with the top wall 74T of the communication portion 74. Hereby, a movement (see an arrow F8) of the fuel toward the vapor discharge pipe 64 from the fuel transfer pipe 52 via the communication portion 74 is prevented. For example, it is possible to prevent the fuel in the first fuel filter 16M from flowing backward in the fuel transfer pipe 52 in a direction opposite to the arrow-F6 direction, thereby effectively realizing a flow (original transfer of the fuel) of the fuel from the second fuel filter 16S to the first fuel filter 16M as illustrated by the arrow F6.

Note that, if the reduced opening 72H is closed (or the sectional area of the opening 72H is reduced) due to rising of the float 76F, it is possible to achieve downsizing and power saving of the fuel-pump main body 42, and to secure an amount of the fuel to be sent out. From such a viewpoint, the sealing portion 80 may not be provided so as to simplify a structure of the float 76F.

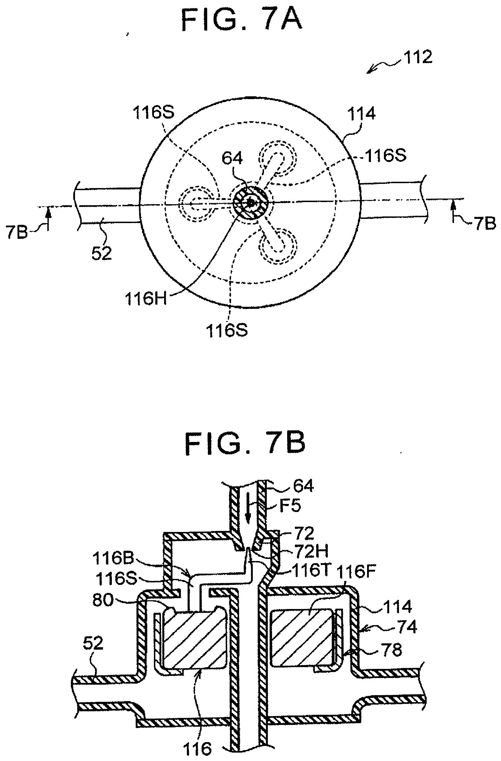

FIGS. 7A to 7C partially illustrate a fuel supply device 112 according to a second embodiment of the present invention in an enlarged manner. The second embodiment is different from the first embodiment in structures of a communication portion and a float valve. However, an overall configuration of the fuel supply device is generally the same as the fuel supply device 12 of the first embodiment, and therefore is not illustrated herein.

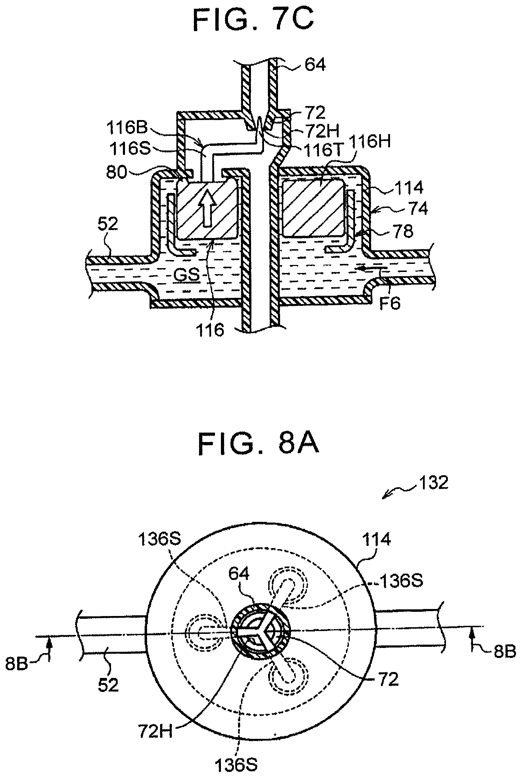

As can be seen from FIGS. 7B and 7C, in the second embodiment, a vapor discharge pipe 64 is disposed in an up-down direction in an intersection portion between a fuel transfer pipe 52 and the vapor discharge pipe 64. In the intersection portion, a fuel GS discharged from a fuel-pump main body 42 flows from an upper side to a lower side as illustrated by an arrow F5, in the second embodiment.

As illustrated in FIG. 7A, a cylindrical float accommodation chamber 114 surrounding the vapor discharge pipe 64 is provided in an upper part of the fuel transfer pipe 52. An annular float 116F surrounding the vapor discharge pipe 64 is disposed in the float accommodation chamber 114.

A valve body 116B is fixed to a top face of the float 116F. The valve body 116B of the second embodiment includes: a central trunk portion 116T inserted into a reduced opening 72H of a reduced portion 72 from a lower side so as to be able to close the reduced opening 72H; and a plurality of branch portions 116S (three in an example of FIG. 7A) radially branched off from a bottom end of the central trunk portion 116T to a lateral direction and further bent downward. A tip (a bottom end) of the branch portion 116S is adhered to the top face of the float 116F. Accordingly, the valve body 116B is stably fixed to the float 116F at a plurality of parts. In the second embodiment, a float valve 116 is constituted by the float 116F and the valve body 116B.

Even in the fuel supply device 112 of the second embodiment configured as such, an operation-effect similar to the fuel supply device 12 of the first embodiment can be obtained. Particularly, in a state where gas exists in the fuel transfer pipe 52, the float valve 116 moves downward as illustrated in FIG 7B so as to open the reduced opening 72H, thereby making it possible to move the gas in the fuel transfer pipe 52 into the vapor discharge pipe 64 via a communication portion 74 (the gas moved into the vapor discharge pipe 64 is discharged into a second fuel filter 16S).

On the other hand, in a case where a fuel GS exists in the fuel transfer pipe 52, the float valve 116 moves upward and the valve body 116B closes the reduced opening 72H, as illustrated in FIG. 7C, so that the fuel GS does not pass through the reduced opening 72H. Hereby, a function of a fuel-pump main body 42 to drive a jet pump 68 becomes unnecessary, thereby making it possible to achieve downsizing and power saving of the fuel-pump main body 42. Besides, when the valve body 116B closes the reduced opening 72H, the flow of the fuel GS in the vapor discharge pipe 64 in an arrow-F5 direction is stopped. Accordingly, even with a small-sized fuel-pump main body 42, it is possible to secure an amount of the fuel to be sent out.

Further, even in the second embodiment, in a state where the float 116F moves upward, an annular sealing portion 80 makes close contact with a top wall 74T of the communication portion 74, so that a movement of the fuel toward the vapor discharge pipe 64 from the fuel transfer pipe 52 via the communication portion 74 is prevented. Hereby, it is possible to effectively realize a flow of the fuel (original transfer of the fuel) from the second fuel filter 16S to a first fuel filter 16M as illustrated by the arrow F6.

FIGS. 8A to 8C partially illustrate a fuel supply device 132 according to a third embodiment of the present invention in an enlarged manner. The third embodiment is also different from the first embodiment in structures of a communication portion and a float valve. However, an overall configuration of the fuel supply device is generally the same as the fuel supply device 12 of the first embodiment, and therefore is not illustrated herein.

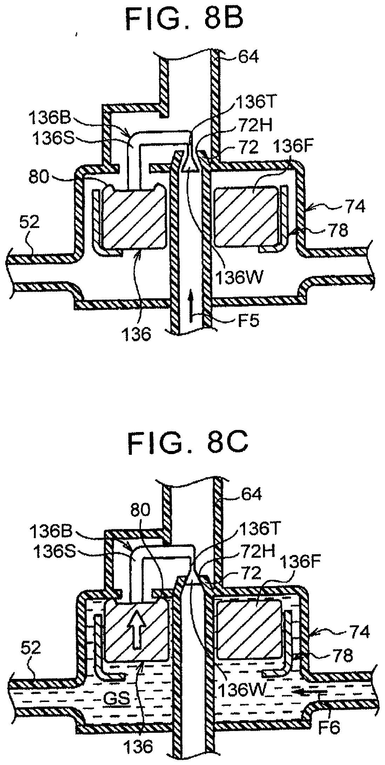

As can be seen from FIGS. 8B and 8C, in the third embodiment, a vapor discharge pipe 64 is disposed in an up-down direction in an intersection portion between a fuel transfer pipe 52 and the vapor discharge pipe 64. However, differently from the second embodiment, a fuel GS discharged from a fuel-pump main body 42 flows, in the intersection portion, from a lower side to an upper side as illustrated by an arrow F5, in the third embodiment.

As illustrated in FIG. 8A, a float 136F is disposed in a cylindrical float accommodation chamber 114, similarly to the second embodiment. A valve body 136B is fixed to a top face of the float 136F. The valve body 136B of the third embodiment includes: a central trunk portion 136T inserted into a reduced opening 72H of a reduced portion 72 from an upper side so as to be able to close the reduced opening 72H; and a plurality of branch portions 136S (three in an example of FIG. 8A) radially branched off from a top end of the central trunk portion 136T to a lateral direction and further bent downward. A tip (a bottom end) of the branch portion 136S is adhered to the top face of the float 136F, similarly to the second embodiment. Accordingly, the valve body 136B is stably fixed to the float 136F at a plurality of parts.

In the meantime, in a tip portion of the central trunk portion 136T, a cone-shaped large-diameter portion 136W of which a diameter is gradually increased is formed, and is always inserted into the reduced portion 72. In a state where the float 136F moves downward, an outer peripheral surface of the large-diameter portion 136W is separated from an inner peripheral surface of the reduced portion 72, as illustrated in FIG. 8B. On the other hand, in a state where the float 136F moves upward, the outer peripheral surface of the large-diameter portion 136W makes close contact with the inner peripheral surface of the reduced portion 72. In the third embodiment, a float valve 136 is constituted by the float 136F and the valve body 136B.

Even in the fuel supply device 132 of the third embodiment configured as such, the operation-effect similar to the fuel supply device 12 of the first embodiment and the fuel supply device 112 of the second embodiment can be obtained. Particularly, in a state where gas exists in the fuel transfer pipe 52, the float valve 136 moves downward as illustrated in FIG. 8B so as to open the reduced opening 72H, thereby making it possible to move the gas inside the fuel transfer pipe 52 to the vapor discharge pipe 64 via a communication portion 74.

On the other hand, in a case where a fuel GS exists in the fuel transfer pipe 52, the float valve 136 moves upward and the valve body 136B closes the reduced opening 72H, as illustrated in FIG. 8C, so that the fuel GS does not pass through the reduced opening 72H. Hereby, a function of a fuel-pump main body 42 to drive a jet pump 68 becomes unnecessary, thereby making it possible to achieve downsizing and power saving of the fuel-pump main body 42. Besides, when the valve body 136B closes the reduced opening 72H, the flow of the fuel in the vapor discharge pipe 64 in an arrow-F5 direction is stopped. Accordingly, even with a small-sized fuel-pump main body 42, it is possible to secure an amount of the fuel to be sent out.

Further, even in the third embodiment, in a state where the float 136F moves upward, an annular sealing portion 80 makes close contact with a top wall 74T of the communication portion 74, so that a movement of the fuel toward the vapor discharge pipe 64 from the fuel transfer pipe 52 via the communication portion 74 is prevented. Hereby, it is possible to effectively realize a flow of the fuel (original transfer of the fuel) from the second fuel filter 16S to the first fuel filter 16M as illustrated by an arrow F6.

Note that the above description deals with an example that the vapor discharge pipe 64 for discharging the fuel GS from the fuel-pump main body 42 is configured to discharge the fuel GS into the second fuel filter 16S, that is, the vapor discharge pipe 64 constitutes the returning pipe of the present invention. However, the present invention is not limited to this configuration.

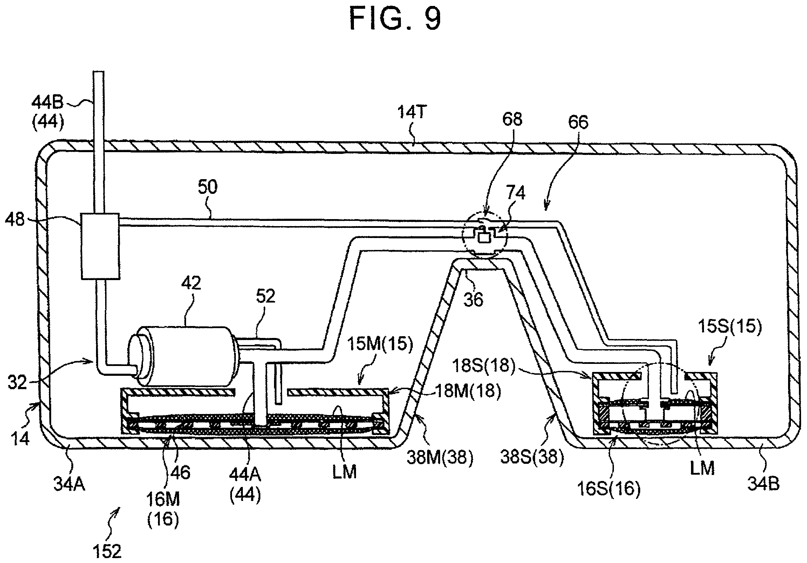

For example, like a fuel supply device 152 of a fourth embodiment as illustrated in FIG. 9, a tip of a return pipe 50 for discharging a return fuel from a pressure regulator 48 may be placed in a second accumulation member 18S. In this configuration, the return fuel is accumulated in the second accumulation member 18S, and a fuel GS from a fuel-pump main body 42 is discharge by a vapor discharge pipe 64 into a first accumulation member 18M. That is, the return pipe 50 constitutes the returning pipe of the present invention.

Note that, in an example illustrated in FIG. 9, any of the configurations according to the first to third embodiments is applicable to a configuration of a communication portion and a float valve.

Further, in the present invention, as is apparent from the above description, the jet pump 68 is provided in the vapor discharge pipe 64, and when gas exists in the fuel transfer pipe 52, the gas is discharged to the vapor discharge pipe 64 by driving of the jet pump 68, and when no gas (less than a predetermined amount of the gas) exists in the fuel transfer pipe 52, the jet pump 68 is stopped. Accordingly, it is possible to appropriately combine this essential configuration with the aforementioned various configurations (e.g., a configuration in which an opening/closing valve (the float valve 54) is provided in the fuel transfer pipe 52; a configuration in which the pressure loss of the fuel suction pipe 44A is set larger than the pressure loss of the fuel transfer pipe 52; and a configuration in which the jet pump 68 on which a negative pressure from the vapor discharge pipe 64 acts is provided in the fuel transfer pipe 52) (not necessarily with all of the configurations).

Each of the above embodiments deals with an example in which when the float valve moves upward in a state where the fuel GS exists in the fuel transfer pipe 52, the vapor discharge pipe is completely closed. However, such a configuration that a sectional area of a passage of a vapor discharge pipe is reduced (the vapor discharge pipe is not completely closed) may be employed. When the vapor discharge pipe is completely closed, an amount of the return fuel becomes zero, thereby making it possible to achieve further downsizing and power saving of the fuel-pump main body 42.

Instead of the aforementioned float valve, a solenoid valve configured to open and close the passage of the vapor discharge pipe 64 (or to change the sectional area of the passage) may be provided.

In such a configuration that the passage of the vapor discharge pipe 64 is opened and closed (or the sectional area of the passage is changed) by the solenoid valve, a fuel amount in the fuel transfer pipe 52 may be detected by a fuel amount sensor, so as to control the solenoid valve based on data thus detected. Instead of this, for example, a time control may be performed such that: the solenoid valve is opened at the time of starting driving of the jet pump 68 (that is, the fuel-pump main body 42); and after a predetermined time has passed from the start of the driving, it is assumed that gas is discharged from the fuel transfer pipe 52, and the solenoid valve is opened. In this case, the aforementioned fuel amount sensor becomes unnecessary. In each of the configurations of the first to fourth embodiments, the valve is eventually closed after a predetermine time has passed from the start of the driving of the jet pump 68 (the fuel-pump main body 42), thereby realizing a configuration in which a fuel amount sensor is unnecessary.

Further, each of the above embodiments deals with a configuration in which the fuel filter 16 is provided in each of the accommodation portions of the fuel-tank main body 14, but is also applicable to a configuration in which no fuel filter 16 is provided. In this case, for example, an end part of the fuel suction pipe 44A may be opened in a bottom part of the first fuel accommodation portion 38M, and an end part of the fuel transfer pipe 52 may be opened in a bottom part of the second fuel accommodation portion 38S.

In the configuration that no fuel filter 16 is provided in the accommodation portions of the fuel-tank main body 14, a member for removing foreign substances in the fuel may be provided at an appropriate position in the fuel suction pipe 44A or the fuel transfer pipe 52 as needed.

The fuel-tank main body of the present invention is not limited to a saddle-type fuel tank including the first fuel accommodation portion 38M and the second fuel accommodation portion 38S, as described above. In short, in such a configuration that a plurality of accommodation portions in which to accommodate a fuel is provided, at least one of the accommodation portions may serve as a "main-side accommodation portion," and the other accommodation portion may serve as a "subsidiary-side accommodation portion." The "main-side accommodation portion" is an accommodation portion provided with sending means including a fuel pump and a sending pipe thereinside, and the "subsidiary-side accommodation portion" is an accommodation portion not provided with the sending means thereinside. Accordingly, the accommodation portions may be formed as different members having a box-like shape. In a configuration in which part of a fuel flowing through the sending means is returned to the subsidiary-side accommodation portion by a returning pipe, if a jet pump is provided in the returning pipe, it is possible to apply the present invention to the configuration.

In addition, even in a configuration not provided with the fuel transfer pipe 52, if the fuel is returned to the subsidiary-side accommodation portion by the vapor discharge pipe 64, it is possible to apply the present invention to the configuration. In this configuration, if fuel sending means is also provided in the subsidiary-side accommodation portion, for example, it is possible to send out the fuel in the subsidiary-side accommodation portion by the fuel sending means.

Further, a relationship of the accumulation member 18 with respect to the fuel suction pipe 44A and the fuel transfer pipe 52 is also not limited to the aforementioned relationship. For example, in the first fuel accommodation portion 38M, the fuel suction pipe 44A may be configured to penetrate through the cover plate portion 22 at a position different from the inflow port.24 of the cover plate portion 22. Similarly, in the second fuel accommodation portion 38S, the fuel transfer pipe 52 may be configured to penetrate through the cover plate portion 22 at a position different from the inflow port 24 of the cover plate portion 22.

Further, the accumulation member 18 may be configured so as not to cover part of the fuel filter 16 (when seen from above, part of the fuel filter 16 protrudes outwardly from the accumulation member 18). In this case, if the fuel suction pipe 44A or the fuel transfer pipe 52 is connected to an protruding part of the fuel filter 16 (a part outside the accumulation member 18), it is possible to configure the fuel suction pipe 44A or the fuel transfer pipe 52 so as not penetrate through the cover plate portion 22.

Description of the Reference Numerals

- 12: fuel supply device
- 14: fuel-tank main body
- 16: fuel filter
- 38: fuel accommodation portion
- 42: fuel-pump main body (sending means)
- 44: fuel delivery pipe (sending means)
- 48: pressure regulator (sending means)
- 52: fuel transfer pipe (fuel transfer passage)
- 68: jet pump
- 74: communication portion
- 76: float valve
- 76F: float
- 76B: valve body
- 112: fuel supply device
- 116: float valve
- 116F: float
- 116B: valve body
- 132: fuel supply device
- 136: float valve
- 136B: valve body

## Claims

1. A fuel supply device comprising:
a fuel-tank main body (1) including a plurality of accommodation portions (38) configured to accommodate a fuel therein;
sending means (42, 44, 48) for sending out the fuel outside the fuel-tank main body, the sending means including a sending pipe (44) extending outside from a main-side accommodation portion, which is one of the accommodation portions, and a fuel pump (42) provided in the sending pipe;
a returning pipes (64) configured to return part of the fuel flowing through the sending means by driving of the fuel pump to a subsidiary-side accommodation portion not provided with the sending means;
a fuel transfer passage (52) configured to transfer the fuel from the subsidiary-side accommodation portion to the main-side accommodation portion;
passage sectional area changing means (76) for changing a sectional area of a passage of the returning pipe; and **characterized by**
a communication portion (74) configured to communicate the fuel transfer passage with the returning pipe so that part of a fluid in the fuel transfer passage is movable to the returning pipe.

2. The fuel supply device according to claim 1, **characterized by** further comprising:
a jet pump (68) provided in the returning pipe and connected to the communication portion.

3. The fuel supply device according to claim 1, **characterized in that**:
the passage sectional area changing means reduces the sectional area by rising of a liquid level in the fuel transfer passage.

4. The fuel supply device according to claim 3, **characterized in that**:
the passage sectional area changing means is a float valve (76) including:
a float (76F) configured to float in the fuel in the fuel transfer passage; and
a valve body (76) configured to change the sectional area along with upward and downward movements of the float.

5. The fuel supply device according to claim 3 or 4, **characterized in that**:
the fuel transfer passage is connected to the fuel pump, so that the fuel is transferred from the subsidiary-side accommodation portion to the main-side accommodation portion by driving of the fuel pump.

6. The fuel supply device according to any one of claims 1 to 5, **characterized by** further comprising:
a plurality of fuel filters (16) formed in a pouch-like shape and disposed respectively in the plurality of accommodation portions, each of the plurality of fuel filters being configured to remove foreign substances from the fuel when the fuel flows thereinside and to form an oil film of the fuel on a surface thereof in a state where the each of the plurality of fuel filters is partially or entirely immersed in the fuel, wherein:
the fuel transfer passage is disposed so that the fuel is transferable between the plurality of fuel filters; and
the sending pipe is disposed so as to be able to send out the fuel from at least one of the plurality of fuel filters.

7. The fuel supply device according to any one of claims 1 to 6, wherein:
the passage sectional area changing means reduces the sectional area after a predetermined time has passed from start of driving of the fuel pump.

## Patentansprüche

1. Kraftstoffzuführvorrichtung, mit:
einem Kraftstoffbehälterhauptkörper (1) mit einer Vielzahl von Aufnahmeabschnitten (38), die eingerichtet sind, um darin Kraftstoff aufzunehmen;
einer Sendeeinrichtung (42, 44, 48), zum Aussenden des Kraftstoffs nach außerhalb des Kraftstoffbehälterhauptkörpers, wobei die Sendeeinrichtung eine Sendeleitung (44), die sich von einem Hauptseitenaufnahmeabschnitt, der einer der Aufnahmeabschnitte ist, nach außerhalb erstreckt, sowie eine Kraftstoffpumpe (42) umfasst, die in der Sendeleitung vorgesehen ist;
einer Rückführleitung (64), die eingerichtet ist, einen Teil des Kraftstoffs, der durch die Sendeeinrichtung strömt, durch Antreiben der Kraftstoffpumpe zu einem Nebenseitenaufnahmeabschnitt zurückzuführen, der nicht mit der Sendeeinrichtung versehen ist;
einem Kraftstoffweiterleitungskanal (52), der eingerichtet ist, den Kraftstoff von dem Nebenseitenaufnahmeabschnitt zu dem Hauptseitenaufnahmeabschnitt weiterzuleiten;
einer Kanalquerschnittsflächenänderungseinrichtung (76), zum Ändern einer Querschnittfläche eines Kanals der Rückführleitung; und **gekennzeichnet durch**
einen Verbindungsabschnitt (74), der eingerichtet ist, den Kraftstoffweiterleitungskanal mit der Rückführleitung zu verbinden, so dass ein Teil eines Fluids in dem Kraftstoffweiterleitungskanal zu der Rückführleitung bewegbar ist.

2. Kraftstoffzuführvorrichtung nach Anspruch 1, **dadurch gekennzeichnet, dass** sie ferner aufweist:
eine Strahlpumpe (68), die in der Rückführleitung vorgesehen und mit dem Verbindungsabschnitt verbunden ist.

3. Kraftstoffzuführvorrichtung nach Anspruch 1, **dadurch gekennzeichnet, dass**
die Kanalquerschnittsflächenänderungseinrichtung die Querschnittfläche durch Erhöhen eines Flüssigkeitspegels in dem Kraftstoffweiterleitungskanal reduziert.

4. Kraftstoffzuführvorrichtung nach Anspruch 3, **dadurch gekennzeichnet, dass**
die Kanalquerschnittsflächenänderungseinrichtung ein Schwimmerventil (76) ist, mit:
einem Schwimmer (76F), der eingerichtet ist, in dem Kraftstoff in dem Kraftstoffweiterleitungskanal zu schwimmen; und
einem Ventilkörper (76), der eingerichtet ist, die Querschnittsfläche zusammen mit Aufwärts- und Abwärtsbewegungen des Schwimmers zu ändern.

5. Kraftstoffzuführvorrichtung nach Anspruch 3 oder 4, **dadurch gekennzeichnet, dass**
der Kraftstoffweiterleitungskanal mit der Kraftstoffpumpe verbunden ist, so dass der Kraftstoff von dem Nebenseitenaufnahmeabschnitt zu dem Hauptseitenaufnahmeabschnitt durch Antreiben der Kraftstoffpumpe weiterleitbar ist.

6. Kraftstoffzuführvorrichtung nach einem der Ansprüche 1 bis 5, **dadurch gekennzeichnet, dass** sie ferner aufweist:
eine Vielzahl von Kraftstofffiltern (16), die in einer beutelartigen Form ausgebildet und jeweils in der Vielzahl von Aufnahmeabschnitten angeordnet ist, wobei jede der Vielzahl von Kraftstofffiltern eingerichtet ist, Fremdstoffe aus dem Kraftstoff zu entfernen, wenn der Kraftstoff darin strömt, und einen Ölfilm des Kraftstoffs auf dessen Oberfläche in einem Zustand auszubilden, in dem jeder der Vielzahl von Kraftstofffiltern teilweise oder ganz in den Kraftstoff eingetaucht ist, wobei
der Kraftstoffweiterleitungskanal so angeordnet ist, dass der Kraftstoff zwischen der Vielzahl von Kraftstofffiltern weitergeleitet werden kann; und
die Sendeleitung angeordnet ist, um den Kraftstoff von mindestens einem der Vielzahl von Kraftstofffiltern aussenden zu können.

7. Kraftstoffzuführvorrichtung nach einem der Ansprüche 1 bis 6, wobei:
die Kanalquerschnittflächenänderungseinrichtung die Querschnittfläche reduziert, nachdem eine vorbestimmte Zeit seit einem Beginn eines Antreibens der Kraftstoffpumpe verstrichen ist.

## Revendications

1. Dispositif d'alimentation en carburant comprenant:
un corps principal de réservoir de carburant (1) comprenant une pluralité de parties de logement (38) configurées pour y loger un carburant ;
des moyens d'envoi (42, 44, 48) pour envoyer le carburant à l'extérieur du corps principal de réservoir de carburant, les moyens d'envoi comprenant un tuyau d'envoi (44) s'étendant à l'extérieur à partir d'une partie de logement du côté principal, qui est l'une des parties de logement, et une pompe à carburant (42) prévue dans le tuyau d'envoi ;
un tuyau de retour (64) configuré pour ramener une partie du carburant s'écoulant à travers les moyens d'envoi par l'entraînement de la pompe à carburant vers une partie de logement du côté auxiliaire non prévue avec les moyens d'envoi ;
un passage de transfert de carburant (52) configuré pour transférer le carburant de la partie de logement du côté auxiliaire à la partie de logement du côté principal ;
des moyens de changement de section transversale de passage (76) pour modifier une section transversale d'un passage du tuyau de retour ; et
**caractérisé par**:
une partie de communication (74) configurée pour faire communiquer le passage de transfert de carburant avec le tuyau de retour de sorte qu'une partie d'un fluide dans le passage de transfert de carburant est mobile jusqu'au tuyau de retour.

2. Dispositif d'alimentation en carburant selon la revendication 1, **caractérisé en ce qu'**il comprend en outre:
une pompe à injection (68) prévue dans le tuyau de retour et raccordée à la partie de communication.

3. Dispositif d'alimentation en carburant selon la revendication 1, **caractérisé en ce que**:
les moyens de changement de section transversale de passage réduisent la section transversale en faisant monter un niveau de liquide dans le passage de transfert de carburant.

4. Dispositif d'alimentation en carburant selon la revendication 3, **caractérisé en ce que**:
les moyens de changement de section transversale de passage sont un pointeau de flotteur (76) comprenant:
un flotteur (76F) configuré pour flotter dans le carburant dans le passage de transfert de carburant ; et
un corps de pointeau (76) configuré pour modifier la section transversale conjointement avec les mouvements ascendant et descendant du flotteur.

5. Dispositif d'alimentation en carburant selon la revendication 3 ou 4, **caractérisé en ce que**:
le passage de transfert de carburant est raccordé à la pompe à carburant, de sorte que le carburant est transféré de la partie de logement du côté auxiliaire à la partie de logement du côté principal par l'entraînement de la pompe à carburant.

6. Dispositif d'alimentation en carburant selon l'une quelconque des revendications 1 à 5, **caractérisé en ce qu'**il comprend en outre:
une pluralité de filtres à carburant (16) formés selon une forme de poche et disposés respectivement dans la pluralité de parties de logement, chacun de la pluralité de filtres à carburant étant configuré pour retirer des corps étrangers du carburant lorsque le carburant s'écoule à l'intérieur de ces derniers et pour former un film d'huile sur le carburant sur sa surface dans un état dans lequel chacun de la pluralité de filtres à carburant est partiellement ou entièrement immergé dans le carburant, dans lequel:
le passage de transfert de carburant est disposé de sorte que le carburant peut être transféré entre la pluralité de filtres à carburant ; et
le tuyau d'envoi est disposé afin de pouvoir envoyer le carburant à partir d'au moins l'un de la pluralité de filtres à carburant.

7. Dispositif d'alimentation en carburant selon l'une quelconque des revendications 1 à 6, dans lequel:
les moyens de changement de section transversale de passage réduisent la section transversale après l'écoulement d'un temps prédéterminé depuis le début de l'entraînement de la pompe à carburant.
